Europäisches Patentamt

(19) European Patent Office

Office européen des brevets

(11) Veröffentlichungsnummer: **0 005 784**
**B1**

(12) **EUROPÄISCHE PATENTSCHRIFT**

(21) Anmeldenummer: **79101544.9**

(51) Int. Cl.³: **H 04 L 11/18, H 04 M 3/56**

(22) Anmeldetag: **21.05.79**

(54) **Anordnung zum Aufbau von Rundschreib- und Konferenzverbindungen**

(30) Priorität: **02.06.78 US 911720**

(43) Veröffentlichungstag der Anmeldung:
**12.12.79 Patentblatt 79/25**

(45) Bekanntmachung des Hinweises auf die Patenterteilung:
**10.12.80 Patentblatt 80/25**

(84) Benannte Vertragsstaaten:
**BE CH DE FR GB IT NL SE**

(56) Entgegenhaltungen:
**AT - B - 294 206**
**DE - A - 2 460 603**
**DE - B - 1 059 022**

(73) Patentinhaber: **SIEMENS AKTIENGESELLSCHAFT**
**Berlin und München**
**Postfach 22 02 61**
**D - 8000 München 22 (DE)**

(72) Erfinder: **Condon, Denis Myles**
**1001 Main Street**
**Riverton, New Jersey 08077 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Anordnung zum Aufbau von Rundschreib- und Konferenzverbindungen

Die Erfindung betrifft eine Anordnung zum Aufbau von Rundschreib- und Konferenzverbindungen in einer Vermittlungsanlage mit den ankommenden und abgehenden Leitungen jeweils zugeordneten Leitungsanschlußschaltungen, mit einem für alle Leitungsanschlußschaltungen gemeinsamen Verbindungsspeicher, in dem jeder Leitungsanschlußschaltung eine Speicherzelle sugeordnet ist, die für die Dauer einer Verbindung die Zuordnung zwischen einer bestimmten rufenden und einer bestimmten gerufenen Leitungsanschlußschaltung enthält und mit Einrichtungen zur Abtastung der Leitungsanschlußschaltungen und zur Adressierung des Verbindungsspeichers, wobei die Leitungsanschlußschaltungen durch Bewertung der in derı adressierten Speicherzelle des Verbindungsspeichers enthaltenen Adresse jeweils nur zur Übertragung eines Nachrichtenzeichens miteinander verbunden sind.

In Fernschreibvermittlungsanlagen wird neben einer Verbindungsherstellung zwischen zwei Teilnehmern auch noch die Möglichkeit gefordert, eine Verbindung zwischen mehr als zwei Teilnehmern herzustellen. Man spricht dann von einer Rundschreibverbindung oder von einer Konferenzverbindung Unter Rundschreibverbindung ist zu verstehen, daß eine Vielzahl von Teilnehmern die von einer bestimmten Teilnehmerstelle aus gesendeten Nachrichten jeweils empfangen können; unter Konferenzverbindung ist zu verstehen, daß die an der Verbindung beteiligten Teilnehmer Nachrichten nicht nur empfangen sondern auch senden können. Zum Aufbau von Rundschreib- und von Konferenzverbindungen werden die Rufnummern der an einer Rundschreibverbindung beteiligten Teilnehmer zunächst von der Teilnehmerstelle, die eine solche Verbindung aufzubauen wünscht, an die Vermittlungsstelle gesendet und dort zum Aufbau der Verbindung zu den einzelnen gerufenen Teilnehmern ausgewertet. In bekannten Vermittlungsanlagen sind dazu sogenannte Rundschreib- bzw. Konferenzschaltungen in der Vermittlungsanlage vorhanden, die die von der rufenden Teilnehmerstelle ausgesendeten Informationen aufnehmen, die Verbindungen zu den gerufenen Teilnehmern herstellen und diese anschalten. Die von einer rufenden Teilnehmerstelle ausgesendeten Nachrichten gelangen dann an alle anderen an dieser Rundschreibverbindung beteiligten Teilnehmer. In neueren Vermittlungsanlagen, in denen der Verbindungsaufbau unter Steuerung eines zentralen Programms durchgeführt wird, sind solche Einrichtungen nicht mehr vorhanden. Derartige Vermittlungsanlagen enthalten für jede ankommende und abgehende Leitung eine Teilnehmeranschlußschaltung, für alle Teilnehmeranschlußschaltungen einen gemeinsamen Verbindungsspeicher, in dem jeder Teilnehmeranschlußschaltung eine eigene Speicherzelle zugeordnet ist. In der Speicherzelle sind jeweils für die Dauer einer Verbindung diejenigen Daten eingetragen, die zur Übermittlung von Nachrichten zwischen miteinander verbundenen Teilnehmern erforderlich sind. Der Eintrag der Daten in den Verbindungsspeicher erfolgt von zentraler Stelle aus, beispielsweise aufgrund programmierter Abläufe in einer zentralen Prozessoreinheit, jeweils am Anfang einer Verbindung. Eine Speicherzelle enthält unter anderem die Nummer derjenigen Leitungsanschlußschaltung, mit der die Lietungsschaltung, der die Speicherzelle zugeordnet ist, verbunden ist Alle Leitungsanschlußschaltungen werden ständig zyklisch abgetastet, wobei gleichzeitig auch die der abgetasteten Leitungsanschlußschaltung zugeordnet Speicherzelle im Verbindungsspeicher adressiert wird. Ist auf einer ankommenden Leitung ein Nachrichtenzeichen eingetroffen und bietet zum Abtastzeitpunkt die dieser Leitung zugeordnete Leitungsanschlußschaltung an ihrem Ausgang das Nachrichtenzeichen an, so wird aus der adressierten Speicherzelle die dort enthaltene Adresse ausgelesen. Diese Adresse ist die Leitungsnummer derjenigen Leitungsanschlußschaltung, an die das Nachrichtenzeichen übergeben werden muß. Aufgrund der Adresse wird die betreffende Leitungsanschlußschaltung angesteuert, das Nachrichtenzeichen wird ihr übergeben und über die abgehende Leitung zum gerufenen Teilnehmer ausgesendet. Nach der Übertragung des Nachrichtenzeichens an die adressierte Leitungsanschlußschaltung wird die Abtastung der weiteren Leitungsanschlußschaltungen fortgesetzt. Auf diese Weise werden sämtliche Leitungsanschlußschaltung abgetastet und auftretende Nachrichtenzeichen aufgrund der im Verbindungsspeicher enthaltenen Adressen an bestimmte Teilnehmeranschlußschaltungen übertragen. Eine solche Vermittlungsanlage ist beispielsweise in der Veröffentlichung "Siemens System EDX", System Description, Addition 1, January 1975, beschrieben.

Aufgabe der Erfindung ist es, in einer solchen Vermittlungsanlage den Aufbau von Rundschreib- bzw. von Konferenzverbindungen zu ermöglichen. Weiterhin ist es eine Aufgabe der Erfindung, die in derartigen Vermittlungsanlagen bereits vorhandenen Leitungsanschlußschaltungen auch zum Aufbau von Rundschreib- bzw. von Konferenzverbindungen mitzubenutzen. Eine weitere Aufgabe der Erfindung besteht darin, die von einem rundschreibberechtigen Teilnehmer ausgesendeten und für mehrere Rundschreibteilnehmer bestimmten Nachrichten zeitverzögert auszusenden.

Diese Aufgaben werden erfindungsgemäß dadurch gelöst, daß neben den Leitungsanschlußschaltungen für ankommende und abgehende Leitungen zusätzliche Rundschreibanschlußschaltungen vorgesehen sind, von denen die erste Rundschreibanschlußschaltung mit den Eingängen der folgenden Rundschreibanschlußschaltungen zur gleichzeitigen Übergabe von Nachrichtenzeichen verbunden ist, daß in der einer rufenden Leitungsanschlußschaltung zugeordneten Speicherzelle im Verbindungsspeicher die Adresse der ersten Rundschreibanschlußschaltung und in den folgenden Rundschreibanschlußschaltungen zugeordneten Speicherzellen im Verbindungsspeicher die Adressen der am Rundschreibbetrieb beteiligten gerufenen Leitungsanschlußschaltungen eingetragen ist, daß eine zentrale Steuerschaltung vorgesehen ist, die über Steuerleitungen und Informationsleitungen mit den Leitungs- und Rundschreibanschlußschaltungen, über Leseleitungen mit dem Verbindungsspeicher und über Adreßbleitungen mit den Einrichtungen zur Abtastung der Leitungs- und Rundschreibanschlußschaltungen verbunden ist.

Weitere Einzelheiten der Erfindung werden im folgenden anhand der Zeichnungen erläutert. Dabei zeigt.

Fig. 1 ein Blockschaltbild nach dem Stande der Technik, anhand dem der Aufbau einer normalen Verbindung zwischen zwei Teilnehmern erläutert wird,

Fig. 2 ein Ausführungsbeispiel in Form eines Blockschaltbildes, anhand dem der Aufbau einer Rundschreibverbindung erläutert wird,

Fig. 3 eine zur Durchführung der Erfindung geeignete Steuerschaltung,

Fig. 4 ein Ausführungsbeispiel, anhand dem eine Konferenzverbindung erläutert wird und

Fig. 5 eine Anordnung, bei der die Anzahl der Teilnehmer an eine Rundschreib- oder Konferenzverbindung beliebig groß sein kann.

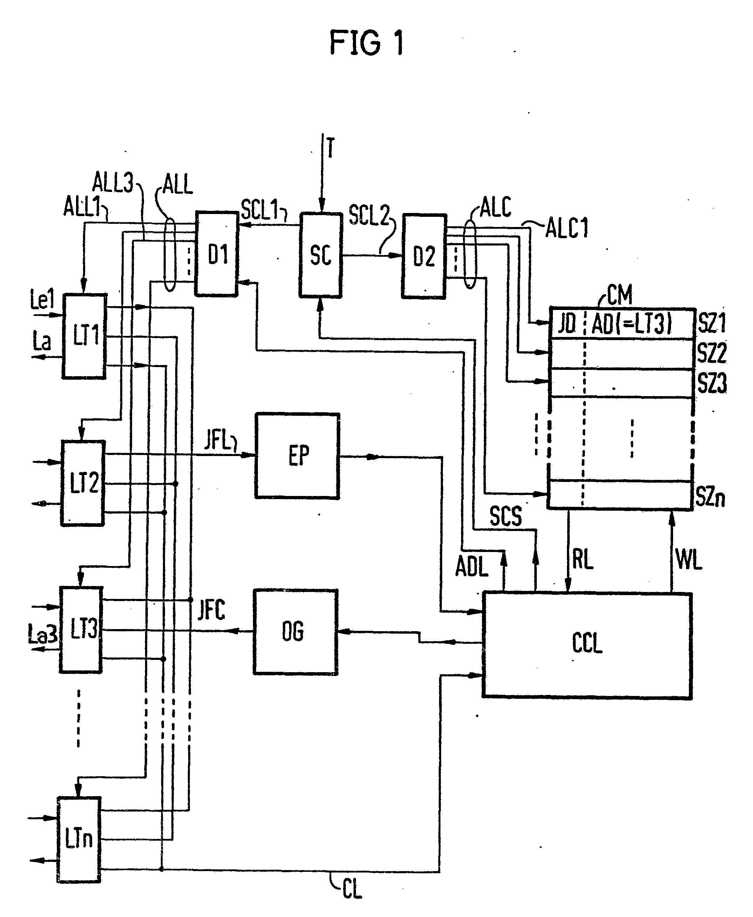

Fig. 1 zeigt die Teile einer Vermittlungsanlage, die notwendig sind, um die auf ankommenden Leitungen eintreffenden Nachrichten unter Steuerung der in einem Verbindungsspeicher enthaltenen Adressen an bestimmte abgehende Leitungen zu übertragen. Dabei werden die jeder ankommenden und abgehenden Leitung Le und La zugeordneten Leitungsanschlußschaltungen LT1 bis LTn von einem Scanner SC zyklisch abgetastet, wobei zugleich auch die der abgetasteten Leitungsanschlußschaltung zugeordnete Speicherzelle SZ1 bis SZn im Verbindungsspeicher CM adressiert wird. Der durch einen zentralen Takt T gesteuerte Scanner SC ist dazu über die Scannleitungen SCL1 und SCL2 mit einem ersten Decodierer D1 und mit einem zweiten Decodierer D2 verbunden. Die beiden Decodierer D1 und D2 sowie der Scanner SC sind in an sich bekannter Weise aufgebaut. Der erste Decodierer D1 ist über die Adressenleitungen ALL mit den Leitungsanschlußschaltungen LT1 bis LTn verbunden, während der zweite Decodierer D2 über die Adressenleitungen ALC mit den einzelnen Speicherzellen SZ1 bis SZn des Verbindungsspeichers CN verbunden ist. Über die Adressenleitungen ALL und ALC werden jeweils in zyklischer Reihenfolge die Leitungsanschlußschaltungen LT1 bis LTn und die entsprechenden Speicherzellen SZ1 bis SZn angesteuert. Jede Leitungsanschlußschaltung LT1 bis LTn ist über eine Informationsleitung IFL mit einem Eingabepuffer EP und über Informationsleitungen IFC mit einem Ausgabegatter OG verbunden. Von jeder Leitungsanschlußschaltung LT1 bis LTn führen weiterhin Steuerleitungen CL an eine zentrale Steuerschaltung CCL. Die im Beispiel jeweils als eine Leitung dargestellten Informationsleitungen IFL und IFC sowie die Steuerleitung CL umfassen im praktischen Fall selbstverständlich jeweils eine Vielzahl von parallelen Leitungen. Über das Eingabepuffer EP werden die auf den Informationsleitungen IFL übertragenen Nachrichten an die zentrale Steuerschaltung CCL übertragen bzw. von dieser über das Ausgabegatter OG an die Informationsleitung IFC abgegeben. Die zentrale Steuerschaltung CCL ist mit dem Verbindungsspeicher CM über Leseleitungen RL und Schreibleitungen WL verbunden. Über eine weiters Steuerleitung ist die zentrale Steuerschaltung CCL mit dem Scanner SC verbunden, um diesem ein den Scannvorgang ein- bzw. ausschaltendes Kriterium SCS zu übertragen. Schließlich ist die zentrale Steuerschaltung CCL über Adreßleitungen ADL auch noch mit dem ersten Decodierer D1 verbunden, über die bei ausgeschaltetem Scanner SC eine Adresse an den ersten Decodierer gelangt und dort zur Ansteuerung einer der zu den Leitungsanschlußschaltungen LT1 bis LTn führenden Adreßleitungen ALL ausgewertet wird. Der Verbindungsspeicher CM enthält in jeder der den Leitungsanschlußschaltungen LT1 bis LTn zugeordneten Speicherzellen SZ1 bis SZn eine Information ID, die den aktuellen Zustand, in dem sich die entsprechende Leitungsanschlußschaltung während des Abtastzeitpunktes befindet, kennzeichnet und eine Adresse AD, die im verbundenen Zustand der Adresse derjenigen Leitungsanschlußschaltung entspricht, mit der die abgetastete Leitungsanschlußeinheit in Verbindung steht. Die Wirkungsweise der in Fig. 1 dargestellten Anlage wird im folgenden anhand eines Beispieles beschrieben. Es wird angenommen, daß die Leitungsanschlußschaltung LT1 mit der Leitungsanschlußeinheit LT3 in Verbindung steht, daß die auf der ankommenden Leitung Le1 eintreffenden Nachrichten an die abgehende Leitung La3 übertragen werden sollen. Über den Scanner SC und die beiden Scannerleitungen SCL1 und SCL2 wird eine der ersten Leitungsanschlußschaltung LT1 entsprechende Adresse en die beiden Decodierer D1 und D2 übertragen. Im ersten Decodierer D1 wird dadurch die Adressenleitung ALL1 aktiviert und die erste Leitungsanschlußschaltung LT1 abgefragt. Über die Adressenleitung ALC1 wird gleich-

zeitig die der abgefragten Leitungsanschluß-schaltung LT1 zugeordnete Speicherzelle SZ1 adressiert. Unter der Annahme, daß auf der ankommenden Leitung Le1 ein Nachrichtenzeichen eingetroffen ist und dieses am Ausgang der Leitungsanschlußschaltung LT1 zum Abtastzeitpunkt zur Verfügung steht, wird das Nachrichtenzeichen über die Informations-leitung IFL in den Eingabepuffer EP über-nommen Gleichzeitig sendet die Leitungs-anschlußschaltung LT1 eine Steuerin-formation über die Steuerleitungen CL aus, die in der zentralen Steuerschaltung CCL empfangen und ausgewertet werden. Aufgrund dieser Steuerinformation wird in der zentralen Steuerschaltung CCL erkannt, daß es sich bei den über die Informationsleitung IFL in den Eingabepuffer EP übernommenen Daten um ein Nachrichtenzeichen handelt. Der zentralen Steuerschaltung CCL stehen gleichzeitig auch die aus der adressierten Speicherzelle SZ1 gelesenen Daten zur Verfügung, aus denen erkannt wird, daß es sich bei der ausgewählten Leitungsanschlußschaltung LT1 um eine im Verbindungszustand befindliche Leitungsanschlußschaltung handelt und daß die von dieser Leitungsanschlußschaltung LT1 abgege-benen Nachrichtenzeichen an die Leitungs-anschlußschaltung LT3 übergeben werden muß. Diese Informationen sind im Speicherbereich FD bzw. im Adressenbereich AD der ersten Speicherzelle SZ1 enthalten und werden über die Leseleitungen RL parallel in die zentrale Steuerschaltung CCL übernommen. Hier wird dann das Signal SCS gebildet, das den Scanner SC stopt. Die aus der Speicherzelle SZ1 übernommene Adresse AD wird über die Adreßleitungen ADL an den ersten Decodierer D1 übertragen und führt dort zur Ansteuerung der Adressenleitung ALL3, über die die gewünschte Leitungsanschlußschaltung LT3 erreicht wird. Dieser wird nunmehr das im Eingabepuffer EP zwischengespeicherte Nachrichtenzeichen über das Ausgabegatter OG und die Informationsleitung IFC übertragen. Die Aussendung auf die abgehende Leitung La3 geschieht in hier nicht dargestellter Weise durch die Leitungs-anschlußschaltung LT3. Mit der Durch-schaltung des Nachrichtenzeichens aus dem Eingabepuffer EP über das Ausgabegatter OG an die Leitungsanschlußschaltung LT3 wird das Stopsignal SC für den Scanner SC wieder abgeschaltet und dieser setzt seinen Abtastzyklus mit der Ansteuerung der nächsten Addressenleitung ALL2 fort, wobei zugleich auch über die Adressenleitung ALC2 die dieser Leitungsanschlußschaltung zugeordnete Speicherzelle SZ2 adressiert wird. In der beschriebenen Weise werden somit alle Leitungsanschlußschaltungen zyklisch abgetastet und im Falle einer am Ausgang einer abgetasteten Leitungs-anschlußschaltung vorhandener Nachrichten-zeichen diese unter Steuerung der in der ent-sprechenden Speicherzelle des Verbindungs-speichers enthaltenen Adresse an die durch diese Adresse bestimmte Leitungsanschlußschaltung übergeben.

Mit den bisher beschriebenen Maßnahmen sind jedoch immer nur zwei Teilnehmer über ihre Leitungsanschlußschaltungen miteinander verbunden. Um in einer Vermittlungsanlage der beschriebenen Art in einfacher Weise und ohne besonderen Mehraufwand auch mehr als zwei Teilnehmer an einer Verbindung beteiligen zu können, also Rundschreib- bzw. Konferenzverbindungen aufbauen zu können, sind gemäß der Erfindung eine Reihe weiterer Leitungsanschlußschaltungen, die im folgenden als Rundschreibanschlußschaltungen bezeichnet sind, sowie im Verbindungsspeicher weitere diesen Rundschreibanschlußschaltungen zugeordnete Speicherzellen vorgesehen. Die Anzahl der Rundschreibanschlußschaltungen und damit auch die Anzahl der zusätzlichen Speicherzellen im Verbindungsspeicher hängt dabei zum einen davon ab, wie-viel rundschreibberechtigte Teilnehmer insge-samt an die Vermittlungsanlage angeschlossen werden sollen und zum anderen wieviel Teilnehmer maximal an einer Rundschreibverbindung bzw. an einer Konferenzverbindung be-teiligt werden sollen. Die Rundschreiban-schlußschaltungen sind dazu zu Gruppen zusammengefaßt, deren Anzahl der an einer Rundschreibverbindung beteiligten Teilnehmer entspricht und von denen die erste mit allen folgenden Rundschreibanschlußschaltungen innerhalb der Gruppe derart verbunden ist, daß das über die erste Rundschreibanschlußschaltung ausgesendete Nachrichtenzeichen gleichzeitig an alle weiteren Rundschreibanschlußschaltungen dieser Gruppe gelangt.

Durch eine während des Verbindungsauf-baues in die den Rundschreibanschluß-schaltungen zugeordneten Speicherzellen eingetragene Adresse über die am Rundschreibbetrieb beteiligten normalen Teilnehmeranschlußschaltungen wird bei der zyklischen Abfrage der Rundschreibanschlußschaltungen stets die gleiche Nachrict an verschiedene Teilnehmer ausgesendet.

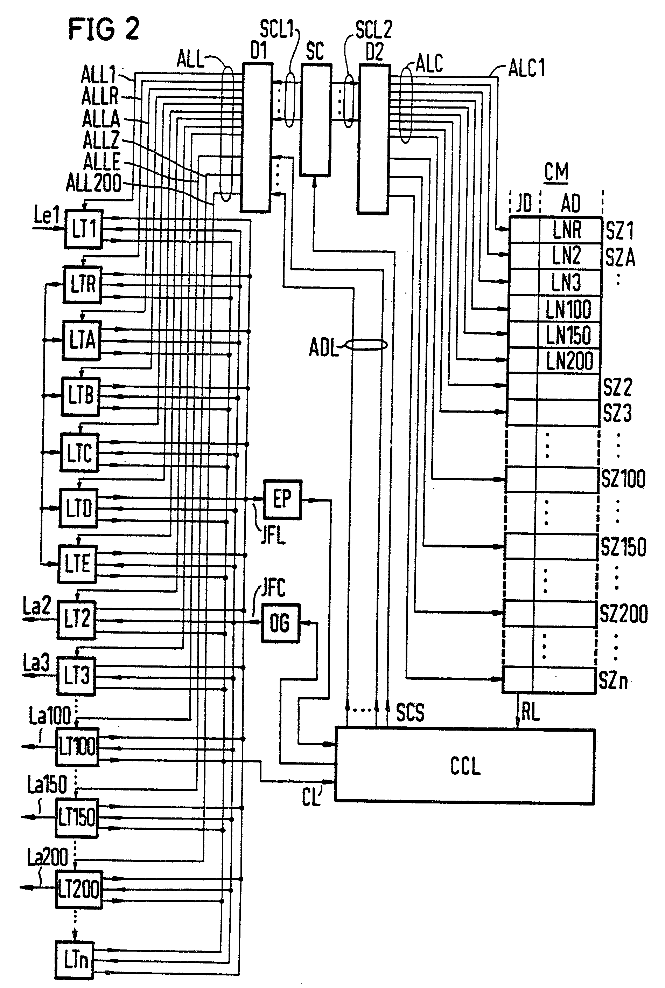

Zur näheren Erläuterung eins Rundschreibbetriebes, bei dem also mehr als zwei Teilnehmer miteinander verbunden sind, wird nun auf Fig. 2 verwiesen. Die dort gezeigte Schaltung enthält wiederum n Leitungsanschlußschaltungen LT1 bis LTn, an die jeweils eine ankommende Leitung Le und eine abgehende Leitung La angeschlossen ist. Weiterhin enthält sie den für alle Leitungs-anschlußschaltungen gem insamen Ver-bindungsspeicher CM, die zentrale Steuer-schaltung CCL, die zur Auswahl der Leitungsanschlußschaltungen bzw. zur Adressierung der einzelnen Speicherzellen im Verbindungsspeicher erforderlichen Einheiten, nämlich die beiden Decodierer D1 und D2 sowie den Scanner SC und schließlich den Eingabepuffer EP und das Ausgabegatter OG. Diese Teile entsprechen in ihrem Aufbau den in Fig. 1 bereits beschriebenen Teilen; auch ihre Wirkungsweise entspricht der anhand von Fig. 1 bereits beschriebenen Wirkungsweise. Zusätzlich zu den normalen Leitungsanschlußschaltungen LT1 bis LTn sind im Beispiel sechs Rundschreibanschlußschaltungen LTR, LTA bis LTE vorhanden, die in Richtung zur Vermittlungsanlage in der gleichen Weise wie normale Leitungsanschlußschaltungen mit dem ersten Decodierer D1, dem Eingabepuffer EP, dem Ausgabegatter OG und der zentralen Steuerschaltung CCL über Adreßleitungen ALL, Informationsleitungen IFL und IFC und Steuerleitungen CL verbunden sind. Ebenso wie normalen Leitungsanschlußschaltungen sind den Rundschreibanschlußschaltungen LTA bis LTE Speicherzellen SZA bis SZE im Verbindungsspeicher CM zugeordnet, die jeweils bei Auswahl der betreffenden Rundschreibanschlußschaltung über eine der Adreßleitungen ALC adressiert werden.

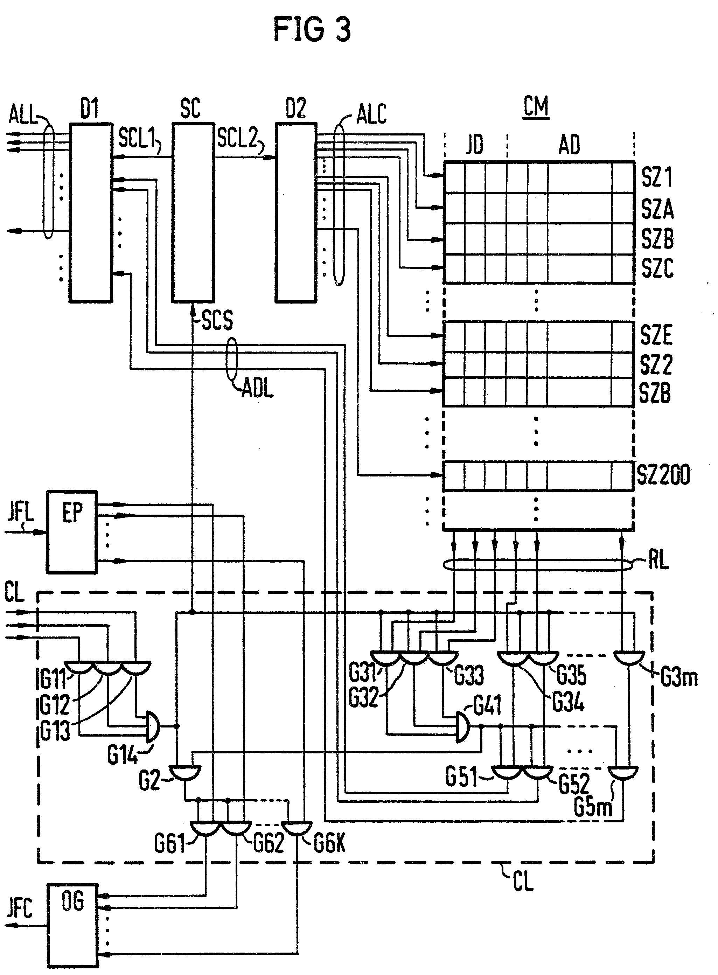

Im folgenden wird nun die Übermittlung der von einem rufenden Teilnehmer über die ankommende Leitung Le1 eintreffende Nachricht an fünf gerufene Teilnehmer beschrieben. Dabei soll es sich um die Teilnehmer handeln, denen die Leitungsanschlußschaltungen LT2, LT3, LT100, LT150 und LT200 zugeordnet sind. Während des Verbindungsaufbaues ist in die Speicherzelle SZ1, die der Teilnehmeranschlußschaltung LT1 zugeordnet ist, aufgrund eines Rundschreibkriteriums die Adresse der ersten aus einer Gruppe von Rundschreibanschlußschaltungen zugeordnete Adresse, im Beispiel die Adresse LNR eingetragen worden. Weiterhin enthalten die den Rundschreibanschlußschaltungen LTA bis LTE der Gruppe zugeordneten Speicherzellen SZA bis SZE die Nummern derjenigen Leitungsanschlußschaltungen, an die die über die ankommende Leitung Le1 eintreffende Nachricht weitergesendet werden soll. An den entsprechenden Stellen im Verbindungsspeicher CM stehen demnach die Leitungsnummern LN2, LN3, LN100, LN150 und LN200. Die erste Rundschreibanschlußschaltung LTR ist mit den folgenden Rundschreibanschlußschaltungen LTA bis LTE derart verbunden, daß diesen eine Nachricht jeweils gleichzeitig übergeben werden kann. Beginnt nun unter diesen Voraussetzungen die zyklische Abfrage der Leitungsanschlußschaltungen, so wird im ersten und im zweiten Decodierer D1 und D2 jeweils die erste Adressenleitung ALL1 und ALC1 ausgewählt. Wie bereits beschrieben, überträgt die somit ausgewählte Leitungsanschlußschaltung LT1 auf den Informationsleitungen IFL das von der ankommenden Leitung LE1 übernommene Nachrichtenzeichen in den Eingabepuffer EP und gibt gleichzeitig eine Steuerinformation über die Leitungen CL an die zentrale Steuerschaltung CCL ab. Wie später anhand von Fig. 3 beschrieben wird, wird aufgrund der Steuerinformation in der zentralen Steuerschaltung CCL erkannt, daß es sich um ein Nachrichtenzeichen handelt. Zugleich wird aufgrund der aus der adressierten Speicherzelle SZ1 gelesenen Information ID auch erkannt, daß es sich um eine durchgeschaltete Verbindung handelt. Durch Aussendung des Signals SCS wird der Scanner SC gestopt, und die in der adressierten Speicherzelle SZ1 enthaltene Adresse LNR über die Adreßleitungen ADL an den ersten Decodierer D1 gegeben. Am Ausgang des ersten Decodierers D1 wird dadurch die Adreßleitung ALLR ausgewählt, die mit der Rundschreibanschlußschaltung LTR verbunden ist. Über das Ausgabegatter OG wird die im Eingabepuffer EP enthaltene Nachricht über die Informationsleitungen IFC an die Rundschreibanschlußschaltung LTR übertragen. Über den Ausgang der Rundschreibanschlußschaltung LTR wird die Nachricht gleichzeitig an alle Rundschreibanschlußschaltungen LTA bis LTE dieser Gruppe übertragen. Dann wird der Scanner SC wieder eingeschaltet und die Abtastung der Anschlußschaltungen fortgesetzt. Nunmehr wird über die Adreßleitung ALLA die Rundschreibanschlußschaltung LTA ausgewählt und die dort angebotene Nachricht in beschriebener Weise über die Informationsleitung IFL an das Eingabepuffer EP übergeben. Zugleich ist aber auch im Verbindungsspeicher CM die der Rundschreibanschlußschaltung LTA zugeordnete Speicherzelle SZA adressiert, in der die Adresse des ersten gerufenen Teilnehmers, im Beispiel die Adresse LN2 enthalten ist, die über die Leseleitungen RL in die zentrale Steuerschaltung CCL gelangt. Wiederum wird der Scanner SC stillgesetzt und die ausgelesene Adresse LN2 wird über die Adreßleitungen ADL an den ersten Decodierer D1 gegeben. Durch Decodierung der Adresse LN2 wird dort die Adreßleitung ALL2 ausgewählt, die mit der Leitungsanschlußschaltung LT2 verbunden ist. In beschriebener Weise gelangt über die Informationsleitungen IFC die im Eingabepuffer EP enthaltene Nachricht und die Leitungsanschlußschaltung LT2 und wird von dort über die abgehende Leitung La2 ausgesendet. Diese Vorgänge wiederholen sich bis schließlich die letzt Rundschreibanschlußschaltung LTE über die Adressenleitung ALLE ausgewählt wird, wobei gleichzeitig die dieser zugeordnete Speicherzelle SZE adressiert und die dort enthaltene Adresseninformation LN200 an den ersten Decodierer D1 gelangt. Dieser wählt daraufhin über die Adressenleitung ALL200 die Leitungsanschlußschaltung LT200 aus, so daß die im Eingabepuffer EP enthaltene Information über das Ausgabegatter OG und die Informationsleitungen IFC dorthin übertragen und über die Leitung La200 zum letzten der an dieser Rundschreibverbindung beteiligten Teilnehmer ausgesendet wird. Das über die ankommende Leitung Le1 eintreffende Nachrichtenzeichen ist somit an fünf gerufene Teilnehmer ausgesendet worden.

Ein Beispiel für den Aufbau der zentralen Steuerschaltung CCL zeigt Fig. 3. Dabei ist vorausgesetzt, daß die über die Steuerleitungen CL eintreffende Steuerinformation als 3 Bit-Information übertragen wird und die über die Informationsleitungen IFL und IFC übertragenen Informationen jeweils K Bit umfassen. Das Beispiel geht davon aus, daß stets dann, wenn in einer Leitungsanschlußschaltung ein Nachrichtenzeichen zur Übertragung bereitsteht, als Steuerinformation die Bitkombination 001 übertragen wird. Weiterhin ist der Verbindungszustand einer Leitungsanschlußschaltung durch die Bitkombination ID=111 in der dieser Leitungsanschlußschaltung zugeordneten Speicherzelle gekennzeichnet. Wurde nun über den Scanner SC und den ersten Decodierer D1 beispielsweise die Leitungsanschlußschaltung LT1 ausgewählt und überträgt diese über die Informationsleitungen IFL ein Nachrichtenzeichen an den Eingabepuffer EP und gleichzeitig damit die Bitkombination 001 auf den Steuerleitungen CL, so wird in der zentralen Steuerschaltung CCL diese Bitkombination in einer ersten Gatteranordnung G11 bis G14 zur Bildung eines Vorbereitungssignals für das Gatter G2 und für die Gatter G31 bis G3m ausgewertet. Über die Gatter G31 bis G3m werden die über die Leseleitungen RL aus der über den zweiten Decodierer D2 adressierten Speicherzelle SZ1 übernommenen Bit der Information ID und der Adresseninformation AD an den Ausgang dieser Gatter durchgeschaltet. Die 3 Bit der Information ID werden im Gatter G41 bewertet, wobei aufgrund der hier angenommenen Voraussetzungen im Falle einer Bitkombination ID=111 über das Gatter G41 ein Ausgangsimpuls gebildet wird, der sowohl das Gatter G2 als auch die Gatter G51 bis G5m entsperrt. Über die Gatter G51 bis G5m wird nunmehr die in der Speicherzelle SZ1 in Form von m Bit enthaltene Adresseninformation AD der gewünschten Teilnehmeranschlußschaltung über die Adreßleitungen ADL an den ersten Decodierer D1 übertragen und zugleich wird über die Gatter G61 bis G6k das Nachrichtenzeichen, das im Eingabepuffer EP in Form eines k Bit umfassenden Nachrichtenzeichens zwischengespeichert wurde, an das Ausgabegatter OG übertragen. Im ersten Decodierer D1 wird aufgrund der über die Adressenleitungen ADL übertragene Adresse eine bestimmte Adressenleitung ausgewählt, so daß die mit dieser Leitung verbundene Leitungs- oder Rundschreibanschlußschaltung das auf den Informationsleitungen IFC übertragene Nachrichtenzeichen übernimmt.

Da der Scanner in an sich bekannter Weise taktgesteuert arbeitet, wird nach Abschalten des Stopsignals SCS der Abtastvorgang mit dem nächsten Taktimpuls an der vorher erreichten Stelle fortgesetzt, d.h. es wird nunmehr über die zyklisch folgende Adressenleitung die mit dieser verbundenen Leitungs- oder Rundschreibanschlußschaltung ausgewählt.

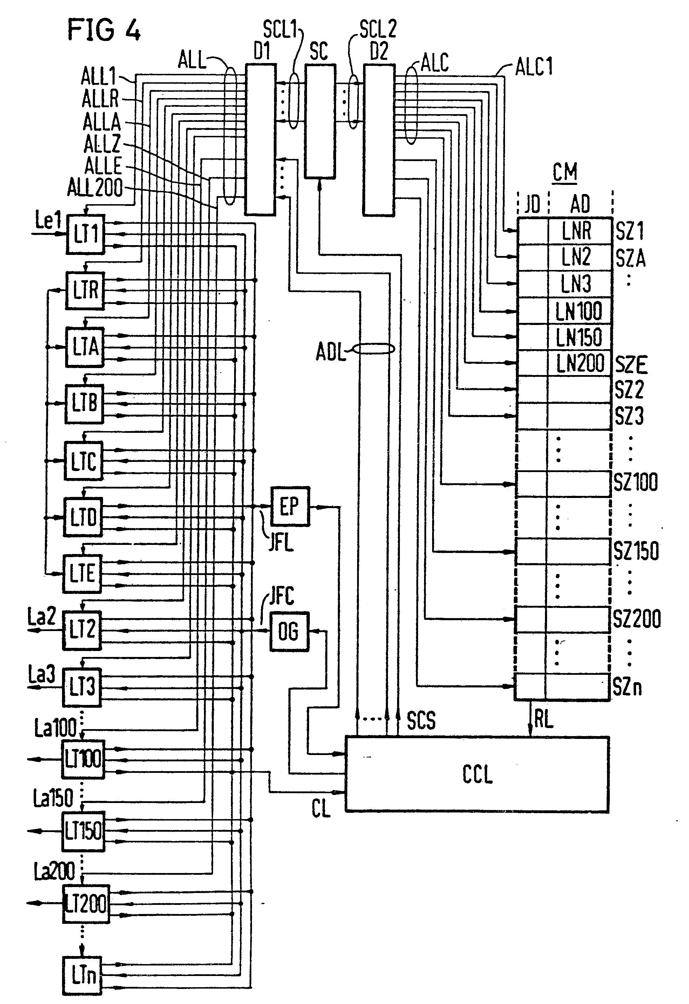

Die beschriebene Schaltungsanordnung ermöglicht aber auch einen Konferenzbetrieb, bei dem die beteiligten Teilnehmer nicht nur die von einer Teilnehmerstelle gesendete Nachrichten empfangen sondern in umgekehrter Richtung auch Nachrichten an alle beteiligten Teilnehmer aussenden können. Zur Erläuterung des Konferenzbetriebes wird auf Fig. 4 verwiesen. Die dort dargestellte Schaltungsanordnung entspricht hinsichtlich Aufbau und Wirkungsweise weitgehend der in Fig. 2 beschriebenen Anordnung. Ein Konferenzbetrieb wird dadurch möglich, daß nunmehr in der Speicherzelle, die einer solchen Leitungsanschlußschaltung zugeordnet ist, über die ein am Rundschreibbetrieb beteiligter gerufener Teilnehmer angeschlossen ist, die Adresse der ersten Rundschreibanschlußschaltung einer Gruppe von Rundschreibanschlußschaltungen eingetragen wird. Das kann jeweils im Anschluß an eine Rundschreibnachrichtensendung geschehen, z.b. nach Aussendung des Nachrichtenendezeichens durch den rufenden Teilnehmer. Der erste der am Rundschreibbetrieb beteiligten Teilnehmer, der daraufhin ein als Konferenzkriterium vereinbartes Kriterium aussendet, wird als neuer rufender Teilnehmer betrachtet. Im Beispiel von Fig. 4 sei angenommen, daß von den fünf am vorhergehenden Rundschreibbetrieb betätigten Teilnehmer der an die normale Leitungsanschlußschaltung LT100 angeschlossen ist, als erster ein solches Kriterium aussendet. In die dieser Leitungsanschlußeinheit zugeordneten Speicherzelle ST100 wird danndie Adresse LNR der ersten Rundschreibanschlußschaltung LTR und in diejenige Speicherzelle, in der vorher die Adresse der nunmehr rufenden Leitungsanschlußschaltung LT100 eingetragen war, wird die Adresse LN1 der vorher rufenden Leitungsanschlußeinheit LT1 eingetragen. Jede von der Leitungsanschlußschaltung LT100, die nunmehr als rufende Teilnehmerschaltung betrachtet wird, ausgesendete Nachricht wird bei Abfrage der Leitungsanschlußeinheit LT100 durch Bewertung der aus dem Verbindungsspeicher CM ausgelesenen Adresse LNR an die erste Rundschreibanschlußschaltung LTR und von dieser parallel an die folgenden Rundschreibanschlußschaltungen LTA bis LTE der Gruppe übertragen. Das geschieht in der anhand von Fig. 2 und Fig. 3 beschriebenen Weise. Die somit von den Rundschreibanschlußschaltungen LTA bis LTE während der Abfrage über die Informationsleitungen IFL in das Eingabepuffer EP übergebene Nachricht wird somit unter Steuerung der in den entsprechenden Speicherzellen SZA bis SZE des Verbindungsspeichers CM enthaltenen Adressen LN2, LN3, LN1, LN150 und LN200 an die beteiligten Leitungsanschlußeinheiten LT2, LT3, LT1, LT150 und LT200 übertragen. Nach Beendigung der Nachrichtensendung sendet der rufende Teilnehmer wiederum ein Nachrichtenendezeichen aus, worauf ein anderer der am Konferenzbetrieb beteiligten Teilnehmer das Konferenzkriterium aussenden kann. In diesem Falle wird dann wiederum in die Speicherzelle, die der entsprechenden Leitungsanschlußeinheit zugeordnet ist, die Nummer der ersten Rundschreibanschlußschaltung eingetragen und die Adresse in der vorher als rufend betrachteten Leitungsanschlußeinheit zugeordneten Speicherzelle durch die Adresse der nunmehr als rufend betrachteten Leitungsanschlußeinheit eingetragen. Auf diese Weise kann jeder der am Rundschreibbetrieb beteiligten Teilnehmer durch Aussendung des Konferenzkriteriums eine Nachricht an alle anderen Teilnehmer aussenden.

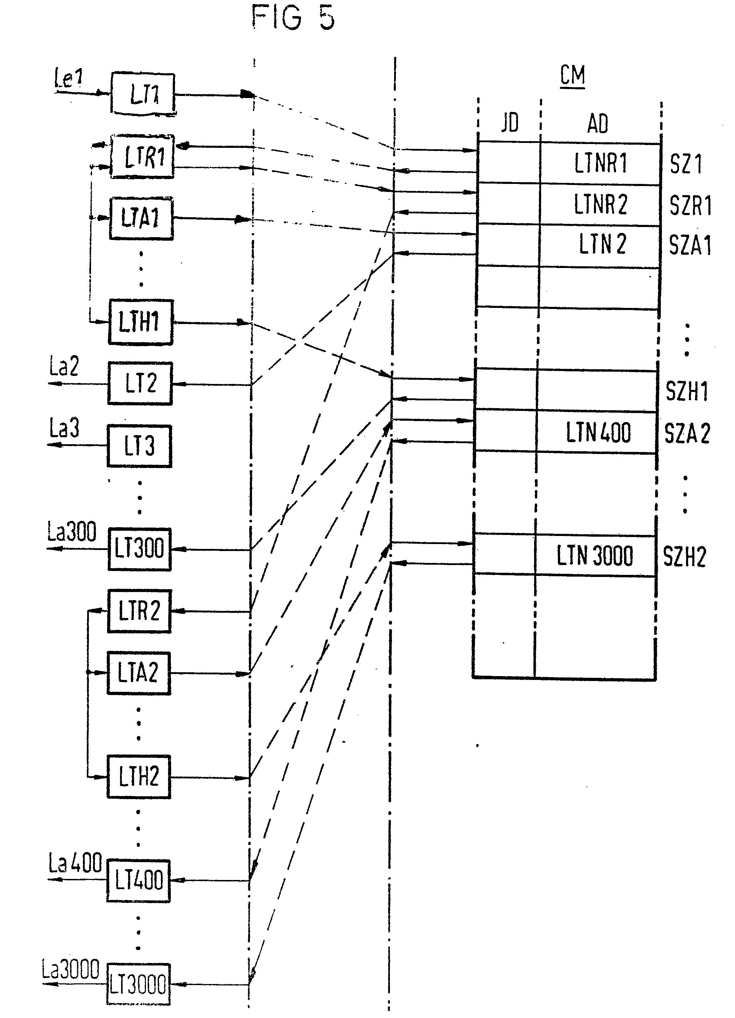

Die Erfindung wurde an einem Beispiel erläutert, bei dem jeweils maximal fünf Teilnehmer an einer Rundschreib- bzw. Konferenzverbindung beteiligt sein können. Es ist selbstverständlich möglich, die Anzahl der maximal beteiligten Teilnehmer zu erhöhen. Beispielsweise sind bie einer maximalen Anzahl von acht an einer Rundschreib- bzw. Konferenzverbindung beteiligten Teilnehmer neun Rundschreibanschlußschaltungen vorgesehen, wobei wiederum die erste mit den acht folgenden Rundschreibanschlußschaltungen derart verbunden ist, daß die Nachrichtenzeichen von der ersten Rundschreibanschlußschaltung jeweils gleichzeitig an die acht weiteren Rundschreibanschlußschaltungen übergeben wird. Für eine sehr große Anzahl von Teilnehmern, an die Rundschreibnachrichten zu senden sind oder die an Konferenzverbindungen beteiligt werden sollen, ist es jedoch zweckmäßig, jeweils mehrere solcher Gruppen von Rundschreibanschlußschaltungen zusammenzufassen. Ein Beispiel dafür zeigt Fig. 5. Dort sind jeweils acht Rundschreibanschlußschaltungen zu einer Gruppe zusammengefaßt. Eine erste Gruppe enthält die Rundschreibanschlußschaltungen LTR1, LTA1 bis LTH1 und eine zweite Gruppe enthält die Rundschreibanschlußschaltungen LTR2, LTA2 bis LTH2. In Fig. 5 sind lediglich die Teilnehmer- und Rundschreibanschlußschaltungen sowie der zentrale Verbindungsspeicher CM und die zwischen den Teilnehmer- und Rundschreibanschlußschaltungen und dem Verbindungsspeicher CM verlaufende Informationswege dargestellt. Im Detail ist die Schaltung wie anhand von Fig. 2 bis Fig. 4 beschrieben, aufgebaut. Anhand von Fig. 5 ist zu erkennen, daß bei der Abfrage der ersten Leitungsanschlußeinheit LT1, auf deren ankommenden Leitung Le1 eine Rundschreibnachricht für eine Vielzahl von Teilnehmern eintrifft, die erste Rundschreibanschlußschaltung LTR1 der ersten Gruppe durch Auswertung der Adresse LNR1 ausgewählt und somit die Nachricht an die folgenden Rundschreibanschlußschaltungen LTA1 bis LTH1 der ersten Gruppe parallel übertragen wird. Bei der Abfrage der Rundschreibanschlußschaltung LTR1 wird aus einer ihr zugeordneten Speicherzelle SZR1 die Adresse der ersten Rundschreibanschlußschaltung LTR2 der zweiten Gruppe entnommen und nunmehr auch dieser die Nachricht übergeben. Von dort gelangt die Nachricht parallel an alle folgenden Rundschreibanschlußschaltungen LTA2 bis LTH2 der zweiten Gruppe. Durch zyklische Abfrage aller Rundschreib- und Teilnehmeranschlußschaltungen in der bereits beschriebenen Weise werden somit die über die ankommende Leitung Le1 eintreffenden Nachrichtenzeichen an 16 verschiedene Teilnehmeranschlußschaltungen übertragen und über die entsprechenden abgehenden Leitungen ausgesendet. Im Beispiel sind allerdings lediglich die Teilnehmeranschlußschaltungen LT2, LT300, LT400 und LT3000 sowie die abgehenden Leitungen La2, La300, La400 und La3000 dargestellt.

**Patentansprüche**

1. Anordnung zum Aufbau von Rundschreib- und Konferenzverbindungen in einer Vermittlungsanlage mit den ankommenden ($Le_i$) und abgehenden ($La_i$) Leitungen jeweils zugeordneten Leitungsanschlußschaltungen ($LT_i$), mit einem für alle Leitungsanschlußschaltungen ($LT_i$) gemeinsamen Verbindungsspeicher (CM), in dem jeder Leitungsanschlußschaltung ($LT_i$) eine Speicherzelle ($SZ_i$) zugeordnet ist, die für die Dauer einer Verbindung die Zuordnung zwischen einer bestimmten rufenden und einer bestimmten gerufenen Leitungsanschlußschaltung ($LT_i$) enthält und mit Einrichtungen (SC, D1, D2) zur Abtastung (D1) der Leitungsanschlußschaltungen ($LT_i$) und zur Adressierung (D2) des Verbindungsspeichers (CM), wobei die Leitungsanschlußschaltungen ($LT_i$) durch Bewertung der in der adressierten Speicherzelle ($SZ_i$) des Verbindungsspeichers (CM) enthaltenen Adresse (AD) jeweils nur zur Übertragung eines Nachrichtenzeichens miteinander verbunden sind, dadurch gekennzeichnet, daß neben den Leitungsanschlußschaltungen (LT1 bis LTn) für ankommende und abgehende Leitungen zusätzliche Rundschreibanschlußschaltungen (LTR, LTA bis LTE) vorgesehen sind, von denen die erste Rundschreibanschlußschaltung (LTR) mit den Eingängen der folgenden Rundschreibanschlußschaltungen (LTA bis LTE) zur gleichzeitigen Übergabe von Nachrichtenzeichen verbunden ist, daß in der einer rufenden Leitungsanschlußschaltung (LT1) zugeordneten Speicherzelle (SZ1) im Verbindungsspeicher (CM) die Adresse (LTNR) der ersten Rundschreibanschlußschaltung (LTR) und in den folgenden Rundschreibanschlußschaltungen (LTA bis LTE) zugeordneten Speicherzellen (SZA bis SZB) im Verbindungsspeicher (CM) die Adressen (LN2 bis LN200) der am Rundschreibbetrieb beteiligten gerufenen Leitungsanschlußschaltungen (LT2 bis LT200) eingetragen ist, daß eine zentrale Steuerschaltung (CCL) vorgesehen ist, die über Steuerleitungen (CL) und Informationsleitungen (IFL, IFC) mit den Leitungs- und Rundschreibanschluß-

## 13 0 005 784 14

schaltungen (LT1 bis LTn, LTR, LTA bis LTE), über Leseleitungen (RL) mit dem Verbindungsspeicher (CM) und über Adreßleitungen (ADL) mit den Einrichtungen (D1) zur Abtastung der Leitungs- und Rundschreibanschlußschaltungen verbunden ist.

2. Anordnung nach Anspruch 1, dadurch gekennzeichnet, daß die Rundschreibanschlußschaltungen bedarfsweise zu mehreren Gruppen zusammenschltbar sind und jeweils die erste Rundschreibanschlußschaltung (LTR1, LTR2) jeder Gruppe mit den Eingängen der folgenden Rundschreibanschlußschaltungen (LTA1 bis LTH1, LTA2, bis LTH2) der Gruppe zur gleichzeitigen Übergabe von Nachrichten verbunden sind, daß in der einer rufenden Leitungsanschlußschaltung (LT1) zugeordneten Speicherzelle (SZ1) im Verbindungsspeicher (CM) die Adresse (LNR1) der ersten Rundschreibanschlußschaltung (LTR1) der ersten Gruppe eingetragen ist, daß dieser Rundschreibanschlußschaltung (LTR1) ebenfalls eine Speicherzelle (SZR1) zugeordnet ist, in der die Nummer (LNR2) der ersten Rundschreibanschlußschaltung (LTR2) der zweiten Gruppe eingetragen ist, und daß in den den folgenden Rundschreibanschlußschaltungen (LTA1 bis LTH1) der ersten Gruppe und in den folgenden Rundschreibanschlußschaltungen (LTA2 bis LTH2) der zweiten Gruppe zugeordneten Speicherzellen (SZA1 bis SZH1, SZA2, bis SZH2) im Verbindungsspeicher (CM) die Adressen (LN2 bis LN3000) der am Rund- schreibbetrieb beteiligten Leitungsanschluß- schaltungen (LT2 bis LT3000) eingetragen ist.

3. Anordnung nach Anspruch 1 und 2, dadurch gekennzeichnet, daß die zentrale Steuer- schaltung (CCL) erste Schaltmittel (G11 bis G14) zur Bewertung der über die Steuer- eitungen (CL) eintreffenden Steuer-infor- mationen, zweite Schaltmittel (G31 bis G3m) zur Übernahme der in der adressierten Speicherzelle des Verbindungsspeichers (CM) enthaltenen Informationen (ID, AD), dritte Schaltmittel (G5 bis G5m) zur Aussendung der aus dem Verbindungsspeicher (CM) übernommenen Adresseninformation (AD) an die Einrichtung (D1) zur Abtastung der Leitungs- und Rundschreibanschlußschaltungen und vierte Schaltmittel (G61 bis G6k) zur Verbindung der Informationsleitungen (IFL, IFC) enthält, und daß über die Information- sleitungen (IFL, IFC) jeweils ein Nachrichtenzeichen zwischen einer durch die Abtasteinrichtung (D1) ausgewählten Leitungs- oder Rundschreibanschlußschaltung (z.B. LT1) und der durch die Adresse (AD) in der der ausgewählten Leitungs- oder Rundschreibanschlußschaltung zugeordneten Speicherzelle im Verbindungsspeicher (CM) be- stimmten Leitungs- oder Rundschreiban- schlußschaltung (z.B. LTR) übertragen wird.

4. Anordnung nach einem der Ansprüche 1 bis 3, dadurch gekennzeichnet, daß die Adresseninformationen (AD) in den Speicherzellen des Verbindungsspeichers (CM) austauschbar sind, daß ein Adressenaustausch durch Bewertung des von einer am Rund- schreibbetrieb beteiligten gerufenen Leitungs- anschlußschaltung (z.B. LT100) aus- gesendeten Kriteriums derart geschieht, daß in der der gerufenen Leitungsanschlußschaltung (LT100) zugeordneten Speicherzelle (SZ100) die Adresse (LNR) der ersten Rundschreibanschlußschaltung (LTR) und in der die Adresse (LN100) der vorher gerufenen Leitungsanschlußschaltung (LT100) enthaltenden Speicherzelle (SZC) die Adresse (LN1) der vorher rufenden Leitungsanschlußschaltung (LT1) eingetragen ist.

**Claims**

. 1. Arrangement for establishing multiple- address and conference connections in a switching system having line termination circuits $(LT_i)$ which are each assigned to the incoming $(Le_i)$ and outgoing $(La_i)$ lines, having a connection memory (CM) which is common to all line termination circuits $(LT_i)$ and wherein each line termination circuit $(LT_i)$ is assigned a storage cell $(SZ_i)$ which contains the assignment between a particular calling and a particular called line termination circuit $(LT_i)$ for the duration of a connection, and having devices (SC, D1, D2) for sampling (D1) the line termination circuits $(LT_i)$ and for addressing (D2) the connection memory (CM), where the line termination circuits $(LT_i)$ are connected to one another by analysing the address (AD) which is contained in the addressed storage cell $(SZ_i)$ of the connection memory, in each case only for the transmission of a communications character, characterised in that besides the line termination circuits (LT1 to LTn) for incoming and outgoing lines there are provided additional multiple-address-termination circuits (LTR, LTA to LTE) of which the first multiple- address-termination circuit (LTR) is connected to the inputs of the following multiple-address- termination circuit (LTA to LTE) for simultaneously transmitting communications characters, that in the connection memory (CM), there is entered the address of the first multiple-address-termination circuit (LTR) in the storage cell (SZ1) which is assigned to a calling line termination circuit (LT1) and in the connection memory (CM), in the storage cells (SZA to SZB) which are assigned to the following multiple-address-termination circuits (LTA to LTE), there are entered the addresses (LN2 to LN200) of the called line termination circuits (LT2 to LT200), which participate in the multiple-address operation, that a central control circuit (CCL) is provided which is connected to the line- and multiple-address- termination circuits (LT1 to LTn, LTR, LTA to LTE) via control lines (CL) and information lines (IFL, IFC), to the connection memory (CM) via read lines (RL), and, via address lines (ADL), to the devices (D1) for sampling the line and multiple-address-termination circuits.

2. Arrangement as claimed in claim 1, characterised in that as and when required the multiple-address-termination circuits can be connected to form a plurality of groups and that in each case the first multiple-address-termination circuit (LTR1, LTR2) of each group is connected to the inputs of the following multiple-address-termination circuits (LTA1 to LTH1, LTA2 to LTH2) of the group for simultaneously transmitting items of communication, that in the connection memory (CM) the address (LNR1) of the first multiple-address-termination circuit (LTR1) of the first group is entered in the storage cell (SZ1) which is assigned to a calling line termination circuit (LT1), that this multiple-address-termination circuit (LTR1) is likewise assigned to a storage cell (SZR1) wherein the number (LNR2) of the first multiple-address-termination circuit (LTR2) of the second group is entered, and that in the connection memory (CM), the addresses (LN2 to LN3000) of the line termination circuits (LT2 to LT3000) which participate in the multiple-address operation are entered in the storage cells (SZA1 to SZH1, SZA2 to SZH2) which are assigned to the following multiple-address-termination circuits (LTA1 to LTH1) of the first group and to the following multiple-address-termination circuits (LTA2 to LTH2) of the second group.

3. Arrangement as claimed in claim 1 and 2, characterised in that the central control circuit (CCL) contains first circuit elements (G11 to G14) for analysing the items of control information, second circuit elements (G31 to G3m) for transferring the items of information (ID, AD) which are contained in the addressed storage cell of the connection memory (CM), third circuit elements (G5 to G5m) for emitting items of address information (AD) transferred from the connection memory (CM), to the device (D1) for sampling the line- and multiple-address-termination circuits, and fourth circuit elements (G61 to G6k) for connecting the information lines (IFL, IFC) and that a communications character is transmitted in each case via the information lines (IFL, IFC), between a line- or multiple-address-termination circuit (e.g. LT1) which is selected by the sampling device (D1) and the line- or multiple-address-termination circuit (e.g. LTR) which is determined by the address (AD) in the storage cell in the connection memory (CM) that is assigned to the selected line- or multiple-address-termination circuit.

4. Arrangement as claimed in one of the claims 1 to 3, characterised in that the items of address information (AD) are interchangeable in the storage cells of the connection memory (CM), that an interchange of addresses is effected by evaluation of the criteria emitted by a called line termination circuit (e.g. LT100), which participates in the multiple-address operation, in such manner that in the storage cell (SZ100) which is assigned to the called line termination circuit (LT100) there is entered the address (LNR) of the first multiple-address-termination circuit (LTR) and in the storage cell (SZC) containing the address (LN100) of the previously called line termination circuit (LT100) there is entered the address (LN1) of the previously calling line termination circuit (LT1).

## Revendications

1. Dispositif pour établir des communication télégraphiques simultanées vers plusieurs postes et des communications de conférence dans une installation de transmission comportant des circuits de raccordement de lignes (LT$_i$) associés respectivement aux lignes d'arrivée (Le$_i$) et aux lignes de départ (La$_j$), et comportant une mémoire de communications (CM) commune pour tous les circuits de raccordement de lignes (LT$_i$) et dans laquelle à chaque circuit de raccordement de lignes (LT$_i$) est associée une cellule de mémoire (SZ$_i$) qui contient, pour la durée d'une communication, l'association entre un circuit de raccordement de lignes (LT$_i$) appelant déterminé et un circuit de raccordement de lignes (LT$_i$) appelé déterminé, et comportant des dispositifs (SC, DI, D2) pour explorer (D1) les circuits de raccordement de lignes (LT$_i$) et pour adresser (D2) la mémoire de communications (CM), les circuits de raccordement de lignes (LT$_i$) étant reliés entre eux, par l'évaluation de l'adresse (AD) contenue dans la cellule de mémoire d'adresses (SZ$_i$) de la mémoire de communications, respectivement uniquement pour la transmission d'un signal d'informations, caractérisé par le fait qu'il est prévu outre les circuits de raccordement de lignes (LT1 à LTn) pour les lignes d'arrivée et de départ, des circuits supplémentaires (LTR, LTA à LTE) de raccordement au système de diffusion télégraphique circulaire, parmi lesquels le premier circuit (LTR) de raccordement au système de diffusion télégraphique circulaire est relié aux entrées du circuit suivant (LTA à LTE) de raccordement au système de diffusion télégraphique circulaire pour la retransmission simultanée de signaux d'informations, que l'adresse (LTNR) du premier circuit (LTR) de raccordement au système de diffusion télégraphique circulaire est mémorisée dans la cellule de mémoire (ZS1) associée au circuit (LT1) de raccordement de lignes appelant et que les adresses (LN2 à LN200) des circuits (LT2 à LT200) de raccordement de lignes appelées, participant au service de diffusion télégraphique circulaire, sont mémorisées dans les cellules (SZA à SZB) de la mémoire de communications (CM) associées aux circuits suivants (LTA à LTE) de raccordement au système de diffusion télégraphique circulaire, et qu'il est prévu un circuit central de commande (CCL) qui est relié, par l'intermédiaire de lignes de commande (CL) et de lignes de transmission d'invormations (IFL, IFC) aux circuits de raccordement de lignes et aux circuits de raccordement au système de diffusion télégraphique circulaire (LT1 à LTn, LTR, LTA à LTE) par l'intermédiaire de lignes de lecture (RL) à la mémoire de communications (CM) et par l'intermédiaire de lignes de transmission d'adresses (ADL) aux dispositifs (D1) pour l'exploration des circuits de raccordement de lignes et des circuits de raccordement au système de diffusion télégraphique circulaire.

2. Dispositif suivant la revendication 1, caractérisé par le fait que les circuits de raccordement au système de diffusion télégraphique circulaire peuvent être interconnectés en cas de besoin pour former plusieurs groupes et que respectivement le premier circuit (LTR1, LTR2) de raccordement au système de diffusion télégraphique circulaire de chaque groupe est relié aux entrées des circuits suivants (LTA1 à LTH1, LTA2 à LTH2) de raccordement au système de diffusion télégraphique circulaire du groupe pour la retransmission simultanée d'informations, que l'address (LNR1) du premier circuit (LT1) de raccordement au système de diffusion télégraphique circulaire du premier groupe est mémorisée dans une cellule (SZ1) de mémoire de communications (GM), associée à un circuit de raccordement de lignes (LTR1) appelant, qu'à ce circuit (LTR1) de raccordement au système de diffusion télégraphique circulaire est également associée une cellule de mémoire (SZR1), dans laquelle le numéro (LNR2) du premier circuit (LTR2) de raccordement au système de diffusion télégraphique circulaire du second groupe est mémorisé, et que les adresses (LN2 à LN3000), les circuits de raccordement de lignes (LT2 à LT3000) participant au service de diffusion télégraphique circulaire, sont mémorisés dans les cellules (SZA1 à SZH1, SZA2 à SZH2) de la mémoire de communications (CM), associées aux circuits suivants (LTA1 à LTH1) de raccordement au système de diffusion télégraphique circulaire du premier groupe et dans les cellules de mémoire associées aux circuits suivants (LTA2 à LTH2) de raccordement au système de diffusion télégraphique circulaire du second groupe.

3. Dispositif suivant les revendications 1 et 2, caractérisé par le fait que le circuit central de commande (CCL) contient des premiers moyens de commutation (G11 à G14) pour évaluer les informations de commande arrivant par l'intermédiaire des lignes de commande (CL), des seconds moyens de commutation (G31 à G3m) pour le transfert des informations (ID, AD) contenues dans la cellule adressée de la mémoire de communications (CM), et le troisième moyen de commutation (G5 à G5m) pour l'envoi de l'information d'addresses (AD), transférées hors de la mémoire de communications (CM), au dispositif (D1) pour explorer les circuits de raccordement de lignes et les circuits de raccordement au système de diffusion télégraphique circulaire, et des quatrième moyens de commutation (G61 à G6k) pour relier les lignes de transmission d'informations (IFL, IFC), et que, par l'intermédiaire des lignes de transmission d'informations (IFL, IFC) respectivement un signal d'information est transmis entre un circuit de raccordement de lignes ou un circuit de raccordement au système de diffusion télégraphique circulaire (par exemple LT1), sélectionné par le dispositif d'exploration (D1), et le circuit de raccordement de lignes ou le circuit de raccordement au système de diffusion télégraphique circulaire (par exemple LTR) déterminé par l'adresse (AD) dans la cellule de la mémoire de communications (CM), associée au circuit sélectionné de raccordement de lignes ou de raccordement au système de diffusion télégraphique ciculaire.

4. Dispositif suivant l'une des revendications 1 à 3, caractérisé par le fait que les informations d'adresses (AD) situées dans les cellules de la mémoire de communications (CM) peuvent être échangées, un échange d'adresses s'effectue par évaluation du critère émis par un circuit de raccordement de lignes (par exemple LT100) appelée, participant au service de diffusion télégraphique ciculaire, de telle manière que l'adresse (LNR) du premier circuit (LTR) de raccordement au système de diffusion télégraphique circulaire est mémorisée dans la cellule de mémoire (SZC) associée au circuit de raccordement de lignes (LT100) appelées et que l'adresse (LN1) du circuit de raccordement de lignes précédemment appelant (LTR) est mémorisé dans la cellule de mémoire (SZC) contenant l'adresse (LN100 du cur circuit de raccordement de lignes (LN100) précédemment appelées.

# FIG 1

**0 005 784**

FIG 2

# FIG 3

FIG 4

FIG 5

0 005 784